(19) **Europäisches Patentamt / European Patent Office / Office européen des brevets**

(11) **EP 4 586 569 B1**

(12) **EUROPEAN PATENT SPECIFICATION**

(45) Date of publication and mention
of the grant of the patent:
**08.07.2026 Bulletin 2026/28**

(21) Application number: **22964690.6**

(22) Date of filing: **07.11.2022**

(51) International Patent Classification (IPC):
*H04L 1/08* (2006.01)  *H04L 1/1825* (2023.01)
*H04L 1/1829* (2023.01)  *H04L 1/1867* (2023.01)
*H04L 5/00* (2006.01)  *H04L 27/00* (2006.01)
*H04W 72/04* (2023.01)  *H04W 72/21* (2023.01)
*H04W 74/0833* (2024.01)

(52) Cooperative Patent Classification (CPC):
**H04L 1/08; H04L 1/1825; H04L 1/1858;**
**H04L 1/1861; H04L 1/1864; H04L 1/1896;**
**H04L 5/0053; H04L 5/0055; H04L 27/00;**
**H04W 72/04; H04W 72/21; H04W 74/0833**

(86) International application number:
**PCT/CN2022/130391**

(87) International publication number:
**WO 2024/098212 (16.05.2024 Gazette 2024/20)**

(54) **WIRELESS COMMUNICATION METHOD, TERMINAL DEVICE, AND NETWORK DEVICE**

DRAHTLOSKOMMUNIKATIONSVERFAHREN, ENDGERÄTEVORRICHTUNG UND
NETZWERKVORRICHTUNG

PROCÉDÉ DE COMMUNICATION SANS FIL, DISPOSITIF TERMINAL ET DISPOSITIF RÉSEAU

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**16.07.2025 Bulletin 2025/29**

(73) Proprietor: **GUANGDONG OPPO MOBILE**
**TELECOMMUNICATIONS**
**CORP., LTD.**
**Dongguan, Guangdong 523860 (CN)**

(72) Inventors:
• **ZHAO, Nande**
**Dongguan, Guangdong 523860 (CN)**
• **HU, Yi**
**Dongguan, Guangdong 523860 (CN)**

(74) Representative: **Penza, Giancarlo**
**Bugnion S.p.A.**
**Viale Lancetti, 17**
**20158 Milano (IT)**

(56) References cited:
WO-A1-2021/062209    WO-A1-2022/231490
CN-A- 115 004 617    CN-A- 115 087 125

• QUALCOMM INCORPORATED: "Coverage enhancements for NR NTN", vol. RAN WG1, no. e-Meeting; 20221010 - 20221019, 30 September 2022 (2022-09-30), XP052259475, Retrieved from the Internet <URL:https://ftp.3gpp.org/tsg_ran/WG1_RL1/TSGR1_110b-e/Docs/R1-2210004.zip R1-2210004 Coverage enhancements for NR NTN.docx> [retrieved on 20220930]
• PETER GAAL ET AL: "Coverage enhancements for NR NTN", vol. RAN WG1, no. Toulouse, FR; 20221114 - 20221118, 5 November 2022 (2022-11-05), XP052222699, Retrieved from the Internet <URL:https://www.3gpp.org/ftp/TSG_RAN/WG1_RL1/TSGR1_111/Docs/R1-2212136.zip R1-2212136 Coverage enhancements for NR NTN.docx> [retrieved on 20221105]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The disclosure relates to the field of communication technologies, and more particularly, to methods for wireless communication, a terminal device, and a network device.

BACKGROUND

In communication scenarios with constrained coverage performance, such as non-terrestrial network (NTN) systems, one transmission of a physical uplink control channel (PUCCH) cannot meet coverage requirements. For example, in an initial access stage, if a PUCCH carrying message 4 (Msg4) hybrid automatic repeat request-acknowledgement (HARQ-ACK) information cannot be successfully transmitted, a terminal device cannot access a network. For another example, if HARQ-ACK information cannot be fed back for dedicated PUCCH resource configuration, the dedicated PUCCH resource configuration will fail.

Document R1-2210004 entitled "Coverage enhancements for NR NTN" by Qualcomm Incorporated discusses enhancements including PUCCH enhancements for Msg4 HARQ-ACK as well as enhancements to the Rel-17 procedures such as DMRS bundling for PUSCH taking into account NTN-specifics. Several transmit diversity techniques for NTN are also evaluated. In addition, enhancements for enabling efficient transmit diversity techniques in NTN are proposed.

Document R1-2212136 entitled "Coverage enhancements for NR NTN" by Qualcomm Incorporated examines the link budget against the required SNR for VoIP, proposes enhancements for PUCCH for Msg 4 HARK-ACK and DMRS bundling, evaluates several transmit diversity techniques for NTN and proposes enhancements to enable efficient transmit diversity techniques in NTN.

SUMMARY

The disclosure relates to methods for wireless communication, a terminal device, and a network device.

The invention is set out in the appended set of claims.

In the embodiments of the disclosure, before a dedicated PUCCH resource is configured, a terminal device may transmit a repetition-based first PUCCH. Compared with traditional PUCCH transmission schemes where a terminal device only supports a single PUCCH transmission before a dedicated PUCCH resource is configured, the embodiments of the disclosure help improving system coverage performance.

BRIEF DESCRIPTION OF THE DRAWINGS

FIG. 1 illustrates a wireless communication system 100 to which the embodiments of the disclosure are applied.

FIG. 2 illustrates a flowchart of a method for wireless communication according to an embodiment of the disclosure.

FIG. 3 illustrates a flowchart of a method for wireless communication according to another embodiment of the disclosure.

FIG. 4 illustrates a flowchart of a method for wireless communication according to another embodiment of the disclosure.

FIG. 5 illustrates a flowchart of a method for wireless communication according to another embodiment of the disclosure.

FIG. 6 illustrates a flowchart of a method for wireless communication according to another embodiment of the disclosure.

FIG. 7 illustrates a flowchart of a method for wireless communication according to another embodiment of the disclosure.

FIG. 8 illustrates a diagram of a terminal device according to embodiments of the disclosure.

FIG. 9 illustrates a diagram of a network device according to embodiments of the disclosure.

FIG. 10 illustrates a structural diagram of a communication device according to embodiments of the disclosure.

DETAILED DESCRIPTION

Technical solutions of the disclosure will be described below in conjunction with drawings.

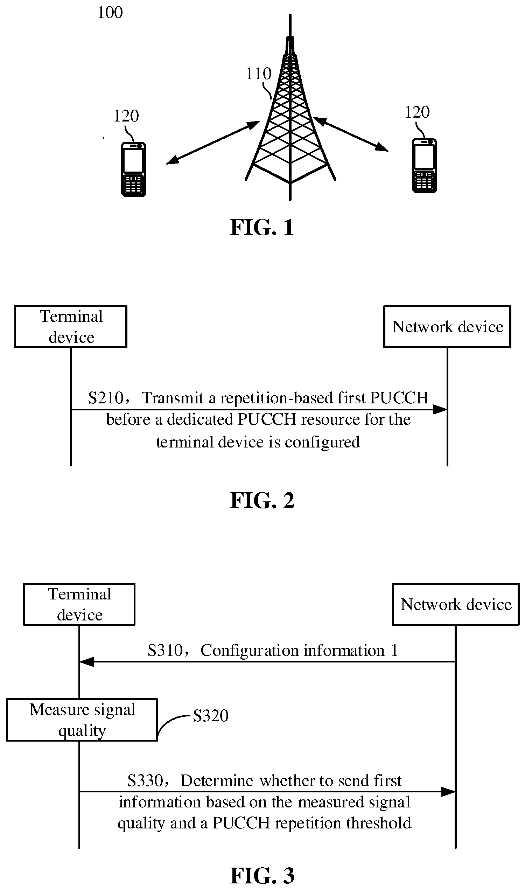

FIG. 1 illustrates a wireless communication system 100 to which the embodiments of the disclosure are applied. The wireless communication system 100 includes a network device 110 and terminal devices 120. The network device 110 may be a device communicating with the terminal device 120. The network device 110 may provide communication coverage for a specific geographical area, and may communicate with the terminal device 120 within the coverage.

FIG. 1 exemplarily illustrates one network device and two terminals. Optionally, the wireless communication system 100 may include multiple network devices, and there may be another number of terminal devices within the coverage of each network device, which is not limited in the embodiments of the disclosure.

Optionally, the wireless communication system 100 may further include other network entities such as a network controller and a mobility management entity, which is not limited in the embodiments of the disclosure.

It is to be understood that the technical solutions of the embodiments of the disclosure may be applied to various communication systems, such as a 5th generation (5G) system or a new radio (NR) system, a long term evolution (LTE) system, an LTE frequency division duplex (FDD) system, an LTE time division duplex (TDD), and the like. The technical solutions provided in the disclosure may also be applied to future communication systems, such as a 6th generation mobile communication system, a satellite communication system, and the like.

The terminal device in the embodiments of the disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a subscriber agent or a user device. The terminal device in the embodiments of the disclosure may be a device that provides voice and/or data connectivity to a user, and may be used to connect people, objects, and machines, for example, a handheld device or a vehicle-mounted device having a wireless connection function. In the embodiments of the disclosure, the terminal device may be a mobile phone, a pad, a notebook, a palm computer, a mobile Internet device (MID), a wearable device, a virtual reality (VR) device, an Augmented Reality (AR) device, an augmented reality (AR) device, a radio terminal used in industrial control, a radio terminal used in self driving, a radio terminal used in remote medical surgery, a radio terminal used in smart grid, a radio terminal used in transportation safety, a radio terminal used in smart city, a radio terminal used in smart home, or the like. Optionally, the UE may act as a base station. For example, the UE may act as a scheduling entity that provides sidelink signals between UEs in vehicle-to-everything (V2X) or device-to-device (D2D) or the like. For example, a cellular phone and a vehicle communicate with each other using sidelink signals. Communication between a cellular phone and smart home devices may occur without the need to relay communication signals through a base station.

The network device in the embodiments of the disclosure may be a device for communicating with a terminal device, and the network device may also be referred to as an access network device or a radio access network device, for example, the network device may be a base station. The network device in the embodiments of the disclosure may refer to a radio access network (RAN) node (or device) that connects the terminal device to the wireless network. A base station may broadly cover or be substituted by the following names: a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a Remote Radio Unit (RRU), an active antenna unit (AAU), a remote radio head (RRH), a central unit (CU), a distributed unit (DU), a positioning node, and the like. The base station may be a macro base station, a micro base station, a relay node, a donor node or the like, or a combination thereof. The base station may also refer to a communication module, a modem or a chip provided in the above-mentioned device or apparatus. The base station may also be a mobile switching center, a device that plays a base station role in device-to-device (D2D), vehicle-to-everything (V2X), or machine-to-machine (M2M) communication, a network-side device in a 6th-generation (6G) network, a device that plays a base station role in a future communication system, or the like. The base station may support networks with the same or different access technologies. The specific technology and the specific device form used by the network device are not limited in the embodiments of the disclosure.

The base station may be fixed or mobile. For example, a helicopter or drone may be configured to act as a mobile base station, and one or more cells may move according to the location of the mobile base station. In other examples, a helicopter or drone may be configured to be used as a device to communicate with another base station.

In some deployments, the network device in the embodiments of the disclosure may refer to a centralized unit (CU) or a distributed unit (DU), or the network device may include a CU and a DU. The gNB may further include an active antenna unit (AAU).

The network device and the terminal device may be deployed on the land, including indoor or outdoor, hand-held, or vehicle-mounted; or may be deployed on the water; or may be deployed in the air, for example on an aircraft, a balloon, and a satellite. In the embodiments of the disclosure, the scenario in which the network device and the terminal device are located is not limited.

It should be understood that all or part of the functionality of the communication device in the disclosure may also be implemented by software functionality running on hardware, or by virtual functionality instantiated on a platform, such as a cloud platform.

A terminal device may access a cell based on a random access procedure. The random access procedure typically includes as follows. The terminal device sends a random access request to a network device and receives a random access response from the network device. After receiving the random access response, the terminal device sends a message 3 (Msg3) to the network device and receives a message 4 (Msg4) for contention resolution from the network device.

In sending the Msg3, the terminal device may apply Msg3 physical uplink shared channel (PUSCH) repetition (or referred to as Msg3 repetition). Whether Msg3 repetition is applied in a current random access procedure may be determined based on the following method.

If a bandwidth part (BWP) for the random access procedure is configured with both a random access resource set indicating Msg3 repetition and a random access resource set not indicating Msg3 repetition, and a reference signal received power (RSRP) of a downlink path loss reference signal is less than a network-configured threshold rsrp-ThresholdMsg3, or if the BWP for the random access procedure is configured with only the random access resource set indicating Msg3 repetition, it is assumed that the Msg3 repetition is applied to the current random access procedure.

If the terminal device selects the random access resource set indicating Msg3 repetition to perform random access, it may be considered that the terminal device implicitly requests Msg3 repetition; otherwise, it is assumed that the Msg3 repetition is not to be applied in the current random access procedure.

The number of repetitions for the Msg3 repetition may be determined by means of configuration. For example, the terminal device may be configured, in common parameters of an uplink BWP, with a set (numberOfMsg3-RepetitionsList) of numbers of PUSCH (i.e., Msg3) repetitions scheduled by a random access response (RAR) uplink grant or by downlink control information (DCI) 0_0 with a cyclic redundancy check (CRC) scrambled with a temporary cell-radio network temporary identifier (TC-RNTI). If the terminal device requests Msg3 repetition, the terminal device transmits the PUSCH over K time slots, where K is further indicated by 2 most significant bits (MSBs) of a modulation and coding scheme (MCS) field in the RAR uplink grant or in the DCI 0_0, from 4 candidate values provided by numberOfMsg3-RepetitionsList. If no numberOfMsg3-RepetitionsList is configured, K is indicated from {1, 2, 3, 4}, as shown in Table 1.

Table 1

| Mapping relationship between 2 MSBs of MCS information field and the number $N_{PUSCH}^{repeat}$ of Msg3 repetitions | | | |
|---|---|---|---|
| numberOfMsg3Repetitions configured | | numberOfMsg3Repetitions not configured | |
| Code Point | K | Code Point | K |
| 00 | 1st value of numberOfMsg3Repetitions | 00 | 1 |
| 01 | 2nd value of numberOfMsg3Repetitions | 01 | 2 |
| 10 | 3rd value of numberOfMsg3Repetitions | 10 | 3 |
| 11 | 4th value of numberOfMsg3Repetitions | 11 | 4 |

After requesting Msg3 repetition, the terminal device reinterprets the MCS field. In this case, through 2 least significant bits (LSBs) of the MCS field in the RAR uplink grant or 3 LSBs of the MCS field in the DCI 0_0, the terminal device determines an MCS for PUSCH transmission from 8 candidate values provided by a higher-layer parameter mcs-Msg3Repetition.

Table 2 Mapping from 2 LSBs of MCS information field in RAR uplink grant to MCS index $I_{MCS}$

| mcs-Msg3Repetition configured | | mcs-Msg3Repetition not configured | |
|---|---|---|---|
| Code Point | K | Code Point | K |
| 00 | 1st value of mcs-Msg3Repetition | 00 | 0 |
| 01 | 2nd value of mcs-Msg3Repetition | 01 | 1 |

(continued)

| mcs-Msg3Repetition configured | | mcs-Msg3Repetition not configured | |
|---|---|---|---|
| Code Point | K | Code Point | K |
| 10 | 3rd value of mcs-Msg3Repetition | 10 | 2 |
| 11 | 1st value of mcs-Msg3Repetition | 11 | 3 |

Table 3 Mapping from 3 LSBs of MCS information field in DCI 0_0 with CRC scrambled with TC-RNTI to MCS Index $I_{MCS}$

| mcs-Msg3Repetition configured | | mes-Msg3Repetition not configured | |
|---|---|---|---|
| Code Point | K | Code Point | K |
| 000 | 1st value of mcs-Msg3Repetition | 000 | 0 |
| 001 | 2nd value of mcs-Msg3Repetition | 001 | 1 |
| 010 | 3rd value of mcs-Msg3Repetition | 010 | 2 |
| 011 | 4th value of mcs-Msg3Repetition | 011 | 3 |
| 100 | 5th value of mcs-Msg3Repetition | 100 | 4 |
| 101 | 6th value of mcs-Msg3Repetition | 101 | 5 |
| 110 | 7th value of mcs-Msg3Repetition | 110 | 6 |
| 111 | 8th value of mcs-Msg3Repetition | 111 | 7 |

The Msg3 repetition can enhance the uplink coverage performance of the Msg3 PUSCH. Compared to the PUSCH, one transmission is usually applied for the PUCCH before the terminal device is configured with a dedicated PUCCH resource. In communication scenarios with constrained coverage performance, such as non-terrestrial network (NTN) systems, one PUCCH transmission cannot meet coverage requirements. For example, in an initial access stage, if a PUCCH carrying Msg4 HARQ-ACK information cannot be successfully transmitted, the terminal device cannot access the network. For another example, if HARQ-ACK information cannot be fed back for a dedicated PUCCH resource configuration, the dedicated PUCCH resource configuration will fail.

Therefore, for the above problems, the embodiments of the disclosure propose to support a PUCCH repetition scheme before a dedicated PUCCH resource is configured, so as to promote the system coverage performance. Hereinafter, the embodiments of the disclosure will be described in detail in conjunction with FIG. 2.

FIG. 2 illustrates a schematic flowchart of a method for wireless communication according to an embodiment of the disclosure. The method of FIG. 2 is performed by a terminal device and a network device, which may be any type of terminal device and network device mentioned above.

Referring to FIG. 2, at operation S210, a terminal device transmits a repetition-based first physical uplink control channel (PUCCH) to a network device before a dedicated PUCCH resource for the terminal device is configured.

In some implementations, if the terminal device has not established an RRC connection, this is a case of "before a dedicated PUCCH resource for the terminal device is configured".

In some implementations, if the terminal device is in a random access procedure, this is a case of "before a dedicated PUCCH resource for the terminal device is configured ".

In some implementations, if the terminal device receives configuration information of the dedicated PUCCH resource but has not yet provided a feedback for the configuration information, this is a case of "before a dedicated PUCCH resource for the terminal device is configured".

In some implementations, the first PUCCH may include a PUCCH in a random access procedure. In this case, repetition of the first PUCCH may also be referred to as a first repetition. Herein, the PUCCH in the random access procedure may include, for example, a PUCCH for Msg4 HARQ-ACK feedback.

In some other implementations, the first PUCCH may include a PUCCH after an Msg4 and before the dedicated PUCCH resource configuration. In this case, repetition of the first PUCCH may also be referred to as a second repetition. Herein, the PUCCH after the Msg4 and before the dedicated PUCCH resource configuration may include, for example, a PUCCH for carrying HARQ-ACK information fed back by the terminal device for the dedicated PUCCH resource configuration.

In some implementations, the first PUCCH may include a PUCCH indicated by DCI 1_0 with a CRC scrambled by a TC-RNTI, for example, a PUCCH for feeding back Msg4 HARQ-ACK, or a PUCCH in an initial access stage.

It is to be noted that unless specifically limited, PUCCH repetition involved in the embodiments of the disclosure may be understood as including PUCCH repetition before dedicated PUCCH resource configuration.

Before performing the operation S210, the terminal device sends first information to the network device. The first information is information related to PUCCH repetition. Herein, the first information is carried in a message 1 (Msg1) and/or an Msg3. Of course, the first information may also be information transmitted separately, which is not limited in the embodiments of the disclosure.

In the embodiments of the disclosure, the terminal device indicates, to the network device, information related to PUCCH repetition through the first information, so that the network device performs scheduling for PUCCH repetition based on the first information, thereby improving reasonability of PUCCH repetition scheduling. Two possible types of the first information are given in conjunction with Embodiments 1 and 2.

Embodiment 1: the first information is used for requesting repetition of the first PUCCH.

In the embodiments of the disclosure, the first information may be explicit information or may be implicit information. That is to say, the terminal device transmits a request for PUCCH repetition to the network device explicitly or implicitly.

With the first information being implicit information as an example, in some implementations, the terminal device may implicitly request PUCCH repetition by initiating a random access procedure on a specific random access resource (also referred to as "a first random access resource"). That is to say, the first random access resource may correspond to the PUCCH repetition. Accordingly, the operation that the terminal device may send the first information to the network device may include: the terminal device initiates a random access procedure to the network device through the first random access resource; in this case, the first random access resource is used for carrying the first information, or the first random access resource is used for implicitly carrying the first information.

On the contrary, it is assumed that other random access resource (i.e., random access resources other than the first random access resource) do not correspond to the PUCCH repetition, or that other random access resources are not used for carrying the first information. When the terminal device initiates the random access procedure through the other random access resources, it may indicate that the terminal device does not request PUCCH repetition.

In some implementations, the first random access resource may include one or more of: a specified physical random access channel (i.e., PRACH) format, a specified PRACH preamble, or a specified random access channel (RACH) occasion (RO). Of course, the first random access resource may also include any other random access resource that can be configured, which is not limited in the embodiments of the disclosure.

It is to be noted that in the embodiments of the disclosure, the first random access resource may be configured by the network device. Of course, the first random access resource may also be pre-configured or may be predefined by a protocol, which is not limited in the embodiments of the disclosure.

With the first information being explicit information as an example, the first information is carried in an Msg3. That is to say, the operation that the terminal device sends the first information to the network device includes: the terminal device sends, to the network device, an Msg3 containing the first information. Of course, in the embodiments of the disclosure, the first information may also be carried in other messages, which is not limited in the embodiments of the disclosure.

The first information is carried in one of the following for the Msg3: a media access control control element (MAC CE), a common control channel (CCCH), or a radio resource control (RRC) signaling.

With the first information being carried in the MAC CE as an example, a payload in the MAC CE may directly carry bit(s) corresponding to the first information to indicate that the terminal device requests PUCCH repetition. For example, PUCCH repetition may be requested using one bit in a payload of a first MAC CE. When the bit is set to 1, it indicates that the terminal device requests PUCCH repetition; and conversely, when the bit is set to 0, it indicates that the terminal device does not request PUCCH repetition. Of course, in the embodiments of the disclosure, when the bit is set to 1, it may indicate that the terminal device does not request PUCCH repetition; conversely, when the bit is set to 0, it may indicate that the terminal device requests PUCCH repetition.

With the first information being carried in the MAC CE as an example, the MAC CE may correspond to the first information to indicate that the terminal device requests PUCCH repetition. For example, when the terminal device carries a second MAC CE in an Msg3, it indicates that the terminal device requests PUCCH repetition. Conversely, if no second MAC CE is carried in the Msg3, it may indicate that the terminal device does not request PUCCH repetition.

For another example, when the terminal device carries the second MAC CE in the Msg3, it indicates that the terminal device does not request PUCCH repetition. Conversely, if no second MAC CE is carried in the Msg3, it may indicate that the terminal device requests PUCCH repetition.

In the embodiments of the disclosure, the second MAC CE may only carry a logical channel identity (LCID); in this case, the payload size of the MAC CE may be 0. Of course, in the embodiments of the disclosure, the payload size of the second MAC CE may not be 0.

With the first information being carried in the MAC CE as an example, an LCID of the MAC CE may correspond to the first information to indicate that the terminal device requests PUCCH repetition. For example, a third MAC CE and a fourth MAC CE correspond to an LCID3 and an LCID4, respectively. The LCID3 may indicate that PUCCH repetition is requested, and the LCID4 may indicate that no PUCCH repetition is requested. In this case, when the terminal device transmits the third MAC CE in an Msg3, it indicates that the terminal device requests PUCCH repetition. Conversely, when the terminal device transmits the fourth MAC CE in an Msg3, it indicates that the terminal device does not request PUCCH repetition.

Of course, in the embodiments of the disclosure, an LCID corresponding to the first information may also be used to indicate whether the terminal device requests PUCCH repetition. For example, when an LCID5 is carried in a fifth MAC CE, it may indicate that the terminal device requests PUCCH repetition. Conversely, when another LCID is carried in the fifth MAC CE, it may indicate that the terminal device does not request PUCCH repetition. For another example, when the LCID5 is carried in the fifth MAC CE, it may indicate that the terminal device does not request PUCCH repetition. Conversely, when another LCID is carried in the fifth MAC CE, it may indicate that the terminal device requests PUCCH repetition.

In the embodiments of the disclosure, the LCID (i.e., LCID5) corresponding to the first information may be predefined by a protocol, or may be preconfigured or configured by the network device, which is not limited in the embodiments of the disclosure. Further, the LCID corresponding to the first information may reuse an LCID specified in an existing protocol, or may be an LCID newly introduced in a future communication protocol. The newly introduced LCID may be an LCID specifically used to indicate the first information.

As introduced above, the first information may also be carried in an RRC signaling. In some implementations, a reserved bit field in the RRC signaling may be used to indicate whether the terminal device requests PUCCH repetition. Of course, in the embodiments of the disclosure, it is also feasible to reuse another bit field in the RRC signaling to indicate whether the terminal device requests PUCCH repetition.

As introduced above, the first information is carried in a CCCH. A first CCCH and/or a second CCCH (i.e., CCCH1) are introduced to correspond to the first information. The first CCCH may correspond to an LCID different from an LCID corresponding to a CCCH in a current communication system, and the second CCCH may correspond to an LCID different from an LCID corresponding to a CCCH in the current communication system. A CCCH service data unit (SDU) transmitted by the terminal device in an Msg3 is an SDU corresponding to the first CCCH and/or the second CCCH, which indicates that the terminal device requests PUCCH repetition. Conversely, the CCCH SDU transmitted by the terminal device in the Msg3 is an SDU corresponding to the CCCH supported in the current communication system, which indicates that the terminal device does not request PUCCH repetition.

It is to be noted that in the embodiments of the disclosure, the first CCCH and the second CCCH correspond to different bit sizes. For example, the first CCCH may correspond to 48 bits. For another example, the second CCCH may correspond to 64 bits.

In some other implementations, the CCCH SDU transmitted by the terminal device in the Msg3 is an SDU corresponding to the first CCCH, which indicates that the terminal device does not request PUCCH repetition. Conversely, the CCCH SDU transmitted by the terminal device in the Msg3 is an SDU corresponding to the CCCH supported in the current communication system, which indicates that the terminal device requests PUCCH repetition.

Of course, in the embodiments of the disclosure, a second CCCH and a third CCCH may be introduced, and both the second CCCH and the third CCCH may correspond to LCIDs different from LCIDs corresponding to CCCHs in the current communication system. Correspondingly, the CCCH SDU transmitted by the terminal device in the Msg3 is an SDU corresponding to the second CCCH, which indicates that the terminal device requests PUCCH repetition. Otherwise, the CCCH SDU transmitted by the terminal device in the Msg3 is an SDU corresponding to the third CCCH, which indicates that the terminal device does not request PUCCH repetition.

Embodiment 2: the first information is used for indicating a PUCCH repetition capability of the terminal device.

The PUCCH repetition capability of the terminal device may include that the terminal device has the PUCCH repetition capability and/or the terminal device has no PUCCH repetition capability. In other words, the first information may be used to indicate whether the terminal device supports PUCCH repetition.

In the embodiments of the disclosure, the first information is explicit information or implicit information. That is to say, the terminal device explicitly transmits, to the network device, information indicating the PUCCH repetition capability of the terminal device, or may implicitly indicate the PUCCH repetition capability of the terminal device to the network device.

With the first information being implicit information as an example, in some implementations, the terminal device may implicitly indicate the PUCCH repetition capability of the terminal device by initiating a random access procedure on a specific random access resource (also referred to as "a first random access resource"). That is to say, the first random access resource may correspond to PUCCH repetition. Accordingly, the operation that the terminal device may send the first information to the network device may include: the terminal device initiates a random access procedure to the network device through the first random access resource; in this case, the first random access resource carries the first information indicating that the terminal device has the PUCCH repetition capability, or the first random access resource is used for implicitly carrying the first information indicating that the terminal device has the PUCCH repetition capability.

On the contrary, it is assumed that other random access resources (i.e., random access resources other than the first random access resource) do not correspond to PUCCH repetition, or that other random access resources are not used for carrying the first information, or that other random access resources are not used for carrying the first information implicitly. When the terminal device initiates the random access procedure through the other random access resources, it may indicate that the terminal device has no PUCCH repetition capability.

In some implementations, the first random access resource may include one or more of: a specified PRACH format, a specified PRACH preamble, or a specified RO. Of course, the first random access resource may also include any other random access resource that can be configured, which is not limited in the embodiments of the disclosure.

It is to be noted that in the embodiments of the disclosure, the first random access resource may be configured by the network device. Of course, the first random access resource may also be pre-configured or may be predefined by a protocol, which is not limited in the embodiments of the disclosure.

With the first information being explicit information as an example, the first information is carried in an Msg3. That is to say, the operation that the terminal device sends the first information to the network device includes: the terminal device sends, to the network device, an Msg3 containing the first information. Of course, in the embodiments of the disclosure, the first information may also be carried in other messages, which is not limited in the embodiments of the disclosure.

The first information is carried in one of the following for the Msg3: an MAC CE, a CCCH, or an RRC signaling.

With the first information being carried in the MAC CE as an example, a payload in the MAC CE may directly carry bit(s) corresponding to the first information to indicate that the PUCCH repetition capability of the terminal device. For example, the PUCCH repetition capability may be indicated using one bit in a payload of a first MAC CE. When the bit is set to 1, it indicates that the terminal device has the PUCCH repetition capability; conversely, when the bit is set to 0, it indicates that the terminal device has no PUCCH repetition capability. Of course, in the embodiments of the disclosure, when the bit is set to 1, it may also indicate that the terminal device has no PUCCH repetition capability; conversely, when the bit is set to 0, it indicates that the terminal device has the PUCCH repetition capability.

With the first information being carried in the MAC CE as an example, the MAC CE may correspond to the first information to indicate the PUCCH repetition capability of the terminal device. For example, when the terminal device carries a second MAC CE in an Msg3, it indicates that the terminal device has the PUCCH repetition capability. Conversely, if no second MAC CE is carried in the Msg3, it may indicate that the terminal device has no PUCCH repetition capability.

For another example, when the terminal device carries the second MAC CE in the Msg3, it may indicate that the terminal device has no PUCCH repetition capability. Conversely, if no second MAC CE is carried in the Msg3, it may indicate that the terminal device has the PUCCH repetition capability.

In the embodiments of the disclosure, the second MAC CE may only carry an LCID; in this case, the payload size of the MAC CE may be 0. Of course, in the embodiments of the disclosure, the payload size of the second MAC CE may not be 0.

With the Msg3 being carried in the MAC CE as an example, an LCID of the MAC CE may correspond to the first information to indicate the PUCCH repetition capability of the terminal device. For example, a third MAC CE and a fourth MAC CE correspond to an LCID3 and an LCID4, respectively. The LCID3 may indicate that the terminal device has the PUCCH repetition capability, and the LCID4 may indicate that the terminal device has no PUCCH repetition capability. In this case, when the terminal device transmits the third MAC CE in an Msg3, it indicates that the terminal device has the PUCCH repetition capability. Conversely, when the terminal device transmits the fourth MAC CE in an Msg3, it indicates that the terminal device has no PUCCH repetition capability.

Of course, in the embodiments of the disclosure, an LCID corresponding to the first information may also be used to indicate the PUCCH repetition capability of the terminal device. For example, when an LCID5 is carried in a fifth MAC CE, it may indicate that the terminal device has the PUCCH repetition capability. Conversely, when another LCID is carried in the fifth MAC CE, it may indicate that the terminal device has no PUCCH repetition capability. For another example, when the LCID5 is carried in the fifth MAC CE, it may indicate that the terminal device has no PUCCH repetition capability. Conversely, when another LCID is carried in the fifth MAC CE, it may indicate that the terminal device has the PUCCH repetition capability.

In the embodiments of the disclosure, the LCID (i.e., LCID5) corresponding to the first information may be predefined by a protocol, or may be preconfigured or configured by the network device, which is not limited in the embodiments of the disclosure. Further, the LCID corresponding to the first information may reuse an LCID specified in an existing protocol, or may be an LCID newly introduced in a future communication protocol. The newly introduced LCID may be an LCID specifically used to indicate the first information.

As introduced above, the first information may also be carried in an RRC signaling. In some implementations, a reserved bit field in the RRC signaling may be used to indicate the PUCCH repetition capability of the terminal device. Of course, in the embodiments of the disclosure, it is also feasible to reuse another bit field in the RRC signaling to indicate the PUCCH repetition capability of the terminal device.

As introduced above, the first information is carried in a CCCH. A first CCCH and/or a second CCCH (i.e., CCCH1) are introduced to correspond to the first information. The first CCCH may correspond to an LCID that is different from an LCID corresponding to a CCCH in a present communication system, and the second CCCH may correspond to an LCID that is different from an LCID corresponding to a CCCH in the present communication system. A CCCH SDU transmitted by the terminal device in an Msg3 is an SDU corresponding to the first CCCH and/or the second CCCH, which indicates that the terminal device has the PUCCH repetition capability. Conversely, the CCCH SDU transmitted by the terminal device in the Msg3 is an SDU corresponding to the CCCH supported in the present communication system, which indicates that the terminal device has no PUCCH repetition capability.

It is to be noted that in the embodiments of the disclosure, the first CCCH and the second CCCH correspond to different bit sizes. For example, the first CCCH may correspond to 48 bits. For another example, the second CCCH may correspond to 64 bits.

In some other implementations, the CCCH SDU transmitted by the terminal device in the Msg3 is an SDU corresponding to the first CCCH, which indicates that the terminal device has no PUCCH repetition capability. Conversely, the CCCH SDU transmitted by the terminal device in the Msg3 is an SDU corresponding to the CCCH supported in the present communication system, which indicates that the terminal device has the PUCCH repetition capability.

Of course, in the embodiments of the disclosure, a second CCCH and a third CCCH may be introduced, and both the second CCCH and the third CCCH may correspond to LCIDs different from LCIDs corresponding to CCCHs in the present communication system. Correspondingly, the CCCH SDU transmitted by the terminal device in the Msg3 is an SDU corresponding to the second CCCH, which indicates that the terminal device has the PUCCH repetition capability. Otherwise, the CCCH SDU transmitted by the terminal device in the Msg3 is an SDU corresponding to the third CCCH, which indicates that the terminal device has no PUCCH repetition capability.

It is to be noted that in the embodiments of the disclosure, the first information in Embodiment 1 and the first information in Embodiment 2 may be two separate pieces of information. In some implementations, the first information in Embodiment 2 may be transmitted to the network device before the first information in Embodiment 1. That is, the terminal device may firstly indicate to the network device that the terminal device has the PUCCH repetition capability, and then the terminal device may request PUCCH repetition from the network device. In some other implementations, the first information in Embodiment 2 may be transmitted to the network device after the first information in Embodiment 1, that is, the terminal device may firstly request PUCCH repetition from the network device, and then the terminal device may indicate to the network device that the terminal device has the PUCCH repetition capability.

Of course, in the embodiments of the disclosure, the first information in Embodiment 1 and the first information in Embodiment 2 may be the same piece of information. That is, the information may both indicate that the terminal device has the PUCCH repetition capability and request PUCCH repetition from the network device. Alternatively, the terminal device may request PUCCH repetition through the first information, while the first information may implicitly indicate that the terminal device has the PUCCH repetition capability.

Based on the above description, it can be seen that in some implementations, the first information may correspond to the first random access resource. In the embodiments of the disclosure, the first random access resource may be configured separately, or may be correlated with a random access resource (also referred to as "a second random access resource") corresponding to repetition of an Msg3 PUSCH. The second random access resource may be used for carrying an Msg3 PUSCH repetition indication, or the second random access resource may be used for implicitly carrying an Msg3 PUSCH repetition indication.

That is to say, the first random access resource belongs to a first random access resource set (denoted by "$U_{PUCCH}$") among configured random access resource sets. The configured random access resource sets further include a second random access resource set. The second random access resource set (denoted by $U_{Msg3}$) corresponds to repetition of the Msg3 PUSCH, or the second random access resource in the second random access resource set is used for carrying an Msg3 PUSCH repetition indication. The first random access resource set and the second random access resource set are configured separately, or are associated with each other.

In some implementations, an association relationship between the first random access resource set and the second random access resource set satisfies one of: the first random access resource set is the same as the second random access resource set; the first random access resource set contains the second random access resource set; or the second random access resource set contains the first random access resource set.

The case that the first random access resource set contains the second random access resource set may include that the second random access resource set is smaller than or equal to the first random access resource set. With the second random access resource set being smaller than the first random access resource set as an example, the second random access resource set may be a subset of the first random access resource set, or the first random access resource set may be a superset of the second random access resource set.

The case that the second random access resource set contains the first random access resource set may include that the first random access resource set is smaller than or equal to the second random access resource set. With the first random access resource set being smaller than the second random access resource set as an example, the first random access resource set may be a subset of the second random access resource set, or the second random access resource set may be a superset of the first random access resource set.

In the embodiments of the disclosure, when the first random access resource set is associated with the second random access resource set, only one of the first and second random access resource sets can be configured, and accordingly, the other one of the first and second random access resource sets may be determined based on the configured random access resource set. For example, the network device may configure the first random access resource set for the terminal device, and accordingly, the terminal device may determine the second random access resource set based on the first random access resource set. For another example, the network device may configure the second random access resource set for the terminal device, and accordingly, the terminal device may determine the first random access resource set based on the second random access resource set. Of course, in the embodiments of the disclosure, when the first random access resource set is associated with the second random access resource set, the two random access resource sets may also be configured separately.

In some other implementations, there may be an intersection between the first random access resource set and the second random access resource set, namely, a third random access resource set. Accordingly, the third random access resource set corresponds to repetition of the Msg3 PUSCH and PUCCH repetition, or random access resources in the third random access resource set are used for carrying the Msg3 PUSCH repetition indication and the first information. That is to say, when the terminal device initiates a random access procedure through a random access resource in the third random access resource set, it may indicate that the terminal device requests PUCCH repetition and Msg3 repetition.

The contents and indication manners of the first information in the embodiments of the disclosure are described above, and trigger manners of the first information in the embodiments of the disclosure are described hereinafter.

In some implementations, whether the first information is to be sent may be determined based on a first condition. That is to say, when the first condition is satisfied, the terminal device may send the first information. Conversely, when the first condition is not satisfied, the terminal device may not send the first information.

In some implementations, the first condition may be determined based on one or more of: the PUCCH repetition capability of the terminal device; uplink coverage; a first threshold for signal quality configured by the network device; or a first random access resource set configured by the network device.

The uplink coverage may be determined based on signal quality measured by the terminal device, that is, the first condition may be determined based on the signal quality measured by the terminal device. For example, when the measured signal quality is low, it may indicate that uplink coverage is poor. For another example, when the measured signal quality is high, it may indicate that uplink coverage is good. In the embodiments of the disclosure, the signal quality may include, for example, a reference signal received power (RSRP) of a reference signal for downlink path loss measurement, herein, the reference signal for downlink path loss measurement may be, for example, a synchronization signal and physical broadcast channel (PBCH) block (SSB).

The first threshold may be understood as a threshold for PUCCH repetition configured by the network device for the terminal device, and may be denoted by "rsrp-ThresholdPUCCH".

With the first condition being determined based on the PUCCH repetition capability of the terminal device as an example, the first condition may include that the terminal device has the PUCCH repetition capability. That is to say, when the terminal device has the PUCCH repetition capability, namely, the first condition is satisfied, the terminal device may send the first information. Conversely, when the terminal device has no PUCCH repetition capability, namely, the first condition is not satisfied, the terminal device may not send the first information.

With the first condition being determined based on the signal quality measured by the terminal device, the first condition may include that the signal quality measured by the terminal device is less than a threshold. That is to say, when the measured signal quality is less than the threshold, namely, the first condition is satisfied, the terminal device may send the first information. Conversely, when the measured signal quality is greater than or equal to the threshold, namely, the first condition is not satisfied, the terminal device may not send the first information.

In the embodiments of the disclosure, the threshold may be predefined by a protocol or may be preconfigured. In this case, the first condition may be understood as being determined based on the signal quality measured by the terminal device.

With the first condition being determined based on the first random access resource set configured by the network device as an example, the first condition may include that the first random access resource set is configured by the network device. That is to say, when the first random access resource set is configured by the network device, namely, the first condition is satisfied, the terminal device may send the first information. Conversely, when no first random access resource set is configured by the network device, namely, the first condition is not satisfied, the terminal device may not send the first information.

In the embodiments of the disclosure, the first conditions above may be used individually as described above, or may be used in combination with each other. In some implementations, the first condition may be determined based on the signal quality measured by the terminal device and the first threshold, and the first condition may include that the signal quality measured by the terminal device is less than the first threshold. That is to say, when the measured signal quality is less than the first threshold, namely, the first condition is satisfied, the terminal device may send the first information. Conversely, when the measured signal quality is greater than or equal to the first threshold, namely, the first condition is not satisfied, the terminal device may not send the first information.

In some other implementations, the first condition may be determined based on the first random access resource set configured by the network device, the signal quality measured by the terminal device and the first threshold. For example, the first condition may include that a random access resource set for PUCCH repetition and a random access resource set not for PUCCH repetition are configured by the network device, and that the signal quality measured by the terminal device is less than the first threshold. That is to say, when a random access resource set for PUCCH repetition and a random access resource set not for PUCCH repetition are configured by the network device, and the signal quality measured by the terminal device is less than the first threshold, namely, the first condition is satisfied, the terminal device may send the first information. Conversely, namely, the first condition is not satisfied, the terminal device may not send the first information.

It is to be noted that in some scenarios described, if only a random access resource for PUCCH repetition is configured by the network device, the terminal device can only request PUCCH repetition. In some other scenarios, if no random access resource for PUCCH repetition is configured by the network device, the terminal device cannot request PUCCH repetition. For the two situations, the terminal device may not need to compare the measured signal quality with the first threshold.

As described above, in the two situations, the terminal device may not use the first threshold. Therefore, in order to reduce the overhead required in configuring the first threshold, the network device may not configure the first threshold for the terminal device. Of course, in the embodiments of the disclosure, the network device may also configure the first threshold for the terminal device.

Conversely, if the network device configures both a random access resource set for PUCCH repetition and a random access resource set not for PUCCH repetition, the terminal device may determine whether to request PUCCH repetition based on a relationship between the measured signal quality and the first threshold. That is to say, in this scenario, the network device may configure the first threshold for the terminal device to use. Of course, in the embodiments of the disclosure, in this scenario, the network device may also not configure the first threshold for the terminal device; in this case, the terminal device may select whether to request PUCCH repetition based on other conditions or randomly.

The first information in the embodiments of the disclosure is described above, and a scheme of configuring the number of PUCCH repetitions in the embodiments of the disclosure is described hereinafter.

In some implementations, before the operation S210, the method further includes that the network device sends second information to the terminal device. The second information is used for indicating the number of repetitions of the first PUCCH.

In the embodiments of the disclosure, there may be many manners to configure the number of repetitions. Description is made in conjunction with Configuration manner 1 and Configuration manner 2.

Configuration manner 1: the number of repetitions is directly configured by second information.

In some implementations, the second information may be carried in a system message, helping realizing PUCCH repetition based on simple flows and signaling. Of course, in the embodiments of the disclosure, the second information may also be information sent separately, which is not limited in the embodiments of the disclosure.

That is to say, the network device may carry the second information in the system message, to configure the number N of repetitions of the first PUCCH. Accordingly, the terminal device may transmit the first PUCCH repeatedly over N time slots based on the number N of repetitions configured by the second information.

In some scenarios, the number of repetitions configured by the second information may be at a cell-level; that is to say, terminal devices in a cell may perform PUCCH repetition based on the number of repetitions configured by the second information. Of course, in the embodiments of the disclosure, the number of repetitions may also be at a terminal-level (or user-level); that is to say, the number of repetitions is valid only for a certain terminal.

With an NTN system as an example, due to the long distance between the satellite and the ground, the coverage performance in the same cell is not different much. In this case, the network device may configure the number of repetitions at the cell-level in the system message, and the terminal devices in the cell may perform PUCCH repetition based on the number of repetitions at the cell-level. For example, the network device may determine the number (N=4) of repetitions at the cell-level based on coverage assessment, and indicates the same to the terminal device through a system message; accordingly, the terminal device can repeatedly transmit the PUCCH over 4 time slots.

It is to be noted that in some other scenarios, if the network device indicates the number of repetitions at the cell-level through the second information, but some terminal devices in the cell do not request PUCCH repetition, or some terminal devices in the cell have no PUCCH repetition capability, these terminal devices may transmit the PUCCH on only one time slot.

Configuration manner 2, the number of repetitions indicated by the second information is selected from a repetition number set.

In the embodiments of the disclosure, by the second information to indicate the number of repetitions selected from the repetition number set, this helps realizing configuring different numbers of PUCCH repetitions for different terminal devices dynamically, to improve the flexibility of the terminal devices in performing PUCCH repetition, and moreover, saving overhead required for PUCCH transmission.

In some implementations, the repetition number set may be preconfigured or may be configured by the network device, for example, the numbers of repetitions may be configured by a system message. Of course, in the embodiments of the disclosure, the repetition number set may also be predefined by a protocol; in this case, the repetition number set may be referred to as "a default repetition number set or a default set ".

In some implementations, the second information may be carried in a DCI. Of course, in the embodiments of the disclosure, the second information may also be carried in other information, or the second information may also be separately transmitted information. This is not limited in the embodiments of the disclosure.

In some implementations, the network device may configure a repetition number set M for PUCCH in a system message. If the terminal device requests PUCCH repetition from the network device and/or indicates to the network device that the terminal device has the PUCCH repetition capability, the network device may indicate to the terminal device, through the second information in the DCI, the number N of repetitions selected from the repetition number set M. Accordingly, the terminal device may transmit the PUCCH repeatedly over N time slots.

For example, the network device may configure a repetition number set M = {2, 4} for PUCCH in the system message. If the terminal device requests PUCCH repetition from the network device and/or indicates to the network device that the terminal device has the PUCCH repetition capability, the network device may indicate to the terminal device, through the second information in the DCI, the number N=2 of repetitions selected from the repetition number set M. Accordingly, the terminal device may transmit the PUCCH repeatedly over 2 time slots.

In some other implementations, the network device does not configure a repetition number set M for PUCCH in a system message. In this case, if the terminal device requests PUCCH repetition from the network device and/or indicates to the network device that the terminal device has the PUCCH repetition capability, the network device may indicate to the terminal device, through the second information in the DCI, the number N of repetitions selected from a default repetition number set P. Accordingly, the terminal device may transmit the PUCCH repeatedly over N time slots.

For example, the network device does not configure a repetition number set M for PUCCH in the system message. In this case, if the terminal device requests PUCCH repetition from the network device and/or indicates to the network device that the terminal device has the PUCCH repetition capability, the network device may indicate to the terminal device, through the second information in the DCI, the number N=2 of repetitions selected from a default repetition number set P= {1,2}. Accordingly, the terminal device may transmit the PUCCH repeatedly over 2 time slots.

As described above, in some implementations, the number of PUCCH repetitions may be indicated by carrying the second information in the DCI (also referred to as "a first DCI"). In the embodiments of the disclosure, a new field may be introduced in the DCI to carry the second information. Of course, a field of the DCI in the present protocol may be reused to carry the second information.

In the embodiments of the disclosure, the DCI may include one or more of: an RAR uplink grant, DCI 0_0 with a CRC scrambled by a TC-RNTI, or DCI 1_0 with a CRC scrambled by a TC-RNTI.

With reusing an existing field in the RAR uplink grant to carry the second information as an example, in some implementations, the second information may be carried by reusing an existing field in the RAR uplink grant. For example, the RAR uplink grant includes a channel state information (CSI) request field, and the CSI request field includes 1 reserved bit. In this case, the second information is carried by the reserved bit to indicate the number of PUCCH repetitions.

In some other implementations, similar to the Msg3 repetition described above, the RAR uplink grant or DCI 0_0 may be reinterpreted, and the second information may be carried by 1 or 2 bits of the MCS field to indicate the number of PUCCH repetitions.

With reusing an existing field in DCI 0_0 in the present protocol to carry the second information as an example, in some implementations, the number of PUCCH repetitions may be indicated in an existing field in DCI 0_0 with a CRC scrambled by a TC-RNTI. For example, similar to the Msg3 repetition described above, the MCS field in DCI 0_0 may be reinterpreted, and the number of PUCCH repetitions may be indicated by 1 or 2 bits of the MCS field.

In some other implementations, at present, DCI 1_0 with a CRC scrambled by a TC-RNTI includes a downlink assignment index (DAI) field, and the DAI field includes 2 reserved bits. In this case, the second information may be carried by 1 or 2 bits of the DAI field, to indicate the number of PUCCH repetitions.

Of course, in the embodiments of the disclosure, one or more of the following in the DCI may also be used to carry the second information: a transmit power control (TPC) command field, a PUCCH resource indication field, or an HARQ feedback timing indication field, to indicate the number of PUCCH repetitions. With using the TPC command field in the DCI as an example, PUCCH closed-loop power control adjustment and the number of PUCCH repetitions may be indicated jointly. With using the PUCCH resource indication field in the DCI as an example, a PUCCH resource and the number of PUCCH repetitions may be indicated jointly. With using the HARQ feedback timing indication field in the DCI as an example, an HARQ feedback timing and the number of PUCCH repetitions may be indicated jointly. Alternatively, a new field may be introduced to carry the second information in the embodiments of the disclosure. For example, the new field may contain 1 bit or 2 bits specifically used for carrying the second information to indicate the number of PUCCH repetitions.

As described above, if the first PUCCH may include a PUCCH in the random access procedure, repetition of the first PUCCH may also be referred to as a first repetition. If the first PUCCH may include a PUCCH after an Msg4 and before the dedicated PUCCH resource configuration, repetition of the first PUCCH may also be referred to as a second repetition. Accordingly, the configuration manners for the number of repetitions described above may be applied to the first repetition and the second repetition.

Of course, in the embodiments of the disclosure, the number of repetitions for the second repetition may be determined based on the number of repetitions for the first repetition. In some implementations, the number of repetitions for the second repetition may be the same as the number of repetitions for the first repetition. Of course, in the embodiments of the disclosure, the number of repetitions for the second repetition may be obtained through adjustment based on the number of repetitions for the first repetition. This is not limited in the embodiments of the disclosure.

For example, the first repetition includes PUCCH repetition scheduled by DCI 1_0 with a CRC scrambled by a TC-RNTI, then the number of repetitions for the second repetition may be the same as that for the first repetition, namely, the number of PUCCH repetitions after the Msg4 and before the dedicated PUCCH resource configuration is the same as the number of the PUCCH repetitions for feeding back Msg4 HARQ-ACK.

In some other implementations, the number of repetitions for the second repetition may also be determined through indication information in a second DCI, or the second information indicating the number of repetitions for the second repetition may also be determined through the indication information in the second DCI. The configuration manners of the second information may be understood with reference to the description above, for example, the Configuration manner 1 and/or the Configuration manner 2 may be used, which will not be described hereinafter again for simplicity. In the embodiments of the disclosure, the second DCI may include DCI 1_0 with a CRC scrambled by a C-RNTI.

In the embodiments of the disclosure, one or more of the following in the second DCI may be used to carry the second information: a TPC command field, a PUCCH resource indication field, or an HARQ feedback timing indication field, to indicate the number of repetitions for the second repetition. With using the TPC command field in the DCI as an example, PUCCH closed-loop power control adjustment and the number of repetitions for the second repetition may be indicated jointly. With using the PUCCH resource indication field in the DCI as an example, a PUCCH resource and the number of repetitions for the second repetition may be indicated jointly. With using the HARQ feedback timing indication field in the DCI as an example, an HARQ feedback timing and the number of repetitions for the second repetition may be indicated jointly. Alternatively, a new field may be introduced in the second DCI to carry the second information in the embodiments of the disclosure. For example, the new field may contain 1 bit or 2 bits specifically used for carrying the second information to indicate the number of repetitions for the second repetition.

In some other implementations, the number of repetitions for the second repetition may also be determined through the number of PUCCH repetitions indicated by a system message. For example, the number of repetitions for the second repetition may be the same as the number of PUCCH repetitions indicated by the system message. For example, the number of repetitions for the second repetition may be obtained through adjustment based on the number of PUCCH repetitions indicated in the system message.

For better understanding, the methods according to the embodiments of the disclosure are described hereinafter in conjunction with FIG. 3 to FIG. 7. It is to be noted that contents such as terms, information and information carrying manners involved in the methods illustrated in FIG. 3 to FIG. 7 may be understood with reference to the description above, and FIG. 3 to FIG. 7 are mainly used to introduce the flows of the methods according to the embodiments of the disclosure.

FIG. 3 illustrates a flowchart of a method for wireless communication according to an embodiment of the disclosure. The method of FIG. 3 is introduced with a PUCCH1 being the first PUCCH as an example. The method of FIG. 3 includes operations S310 to S330.

At operation S310, a network device sends configuration information 1 to a terminal device.

In some implementations, the configuration information 1 is used for configuring a random access resource set (i.e., a first random access resource set) for PUCCH repetition, a random access resource set not for PUCCH repetition, and a PUCCH repetition threshold (also referred to as "a first threshold").

At operation S320, the terminal device measures signal quality.

In some implementations, the terminal device may measure a reference signal received power (RSRP) of a reference signal for determining a downlink path loss.

At operation S330, the terminal device determines whether to send first information based on the measured signal quality and a PUCCH repetition threshold.

In some implementations, if the measured signal quality is less than the PUCCH repetition threshold, the terminal device initiates random access on random access resource(s) for PUCCH repetition, to indicate a request for PUCCH repetition.

Conversely, if the measured signal quality is greater than or equal to the PUCCH repetition threshold, the terminal device initiates random access on random access resource(s) not for PUCCH repetition, to indicate no request for PUCCH repetition.

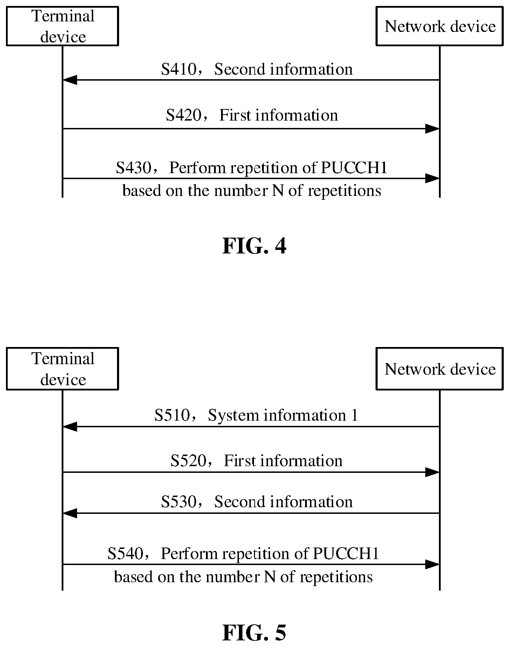

FIG. 4 illustrates a flowchart of a method for wireless communication according to another embodiment of the disclosure. The method of FIG. 4 is introduced with a PUCCH1 being the first PUCCH as an example. The method of FIG. 4 includes operations S410 to S430.

At operation S410, a network device sends second information to a terminal device.

In some implementations, the second information is used for configuring the number N of repetitions for PUCCH repetition at a cell-level.

At operation S420, the terminal device sends first information to the network device.

The first information is used for indicating that the terminal device has a PUCCH repetition capability, and/or that the terminal device requests PUCCH repetition.

At operation S430, the terminal device performs repetition of the PUCCH1 based on the number N of repetitions.

In some implementations, the terminal device repeatedly transmits the PUCCH1 over N time slots.

It is to be noted that, in the embodiments of the disclosure, the order of performing the operation S410 and the operation S420 is not limited. For example, the operation S410 may be performed before the operation S420. For another example, the operation S410 may be performed after the operation S420.

FIG. 5 illustrates a flowchart of a method for wireless communication according to another embodiment of the disclosure. The method of FIG. 5 is introduced with a PUCCH1 being the first PUCCH as an example. The method of FIG. 5 includes operations S510 to S540.

At operation S510, a network device sends system information 1 to a terminal device.

In some implementations, the system information 1 is used for configuring a repetition number set M.

At operation S520, the terminal device sends first information to the network device.

The first information is used for indicating that the terminal device has a PUCCH repetition capability, and/or that the terminal device requests PUCCH repetition.

At operation S530, the network device sends second information to the terminal device.

In some implementations, the second information is used for indicating a repetition number N (or the number N of repetitions) selected from the repetition number set M.

At operation S540, the terminal device performs repetition of the PUCCH1 based on the number N of repetitions.

In some implementations, the terminal device repeatedly transmits the PUCCH1 over N time slots.

It is to be noted that in the embodiments of the disclosure, the order of performing the operation S510 and the operation S520 is not limited. For example, the operation S510 may be performed before the operation S520. For another example, the operation S510 may be performed after the operation S520.

Additionally, in the embodiments of the disclosure, the order of performing the operation S520 and the operation S530 is not limited. For example, the operation S520 may be performed before the operation S530. For another example, the operation S520 may be performed after the operation S530.

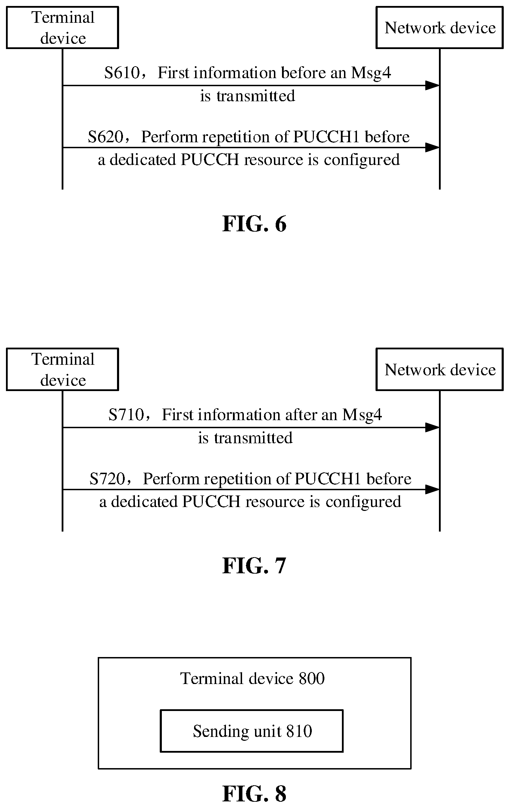

FIG. 6 illustrates a flowchart of a method for wireless communication according to another embodiment of the disclosure. The method of FIG. 6 is introduced with a PUCCH1 being the first PUCCH as an example. The method of FIG. 6 includes operations S610 to S620.

At operation S610, a terminal device sends first information to a network device before an Msg4 is transmitted.

In some implementations, the first information is used for indicating that the terminal device has a PUCCH repetition capability, and/or that the terminal device requests PUCCH repetition.

At operation S620, the terminal device performs repetition of the PUCCH1 before a dedicated PUCCH resource is configured.

FIG. 7 illustrates a flowchart of a method for wireless communication according to another embodiment of the disclosure. The method of FIG. 7 is introduced with a PUCCH1 being the first PUCCH as an example. The method of FIG. 7 includes operations S710 to S720.

At operation S710, a terminal device sends first information to a network device after an Msg4 is transmitted.

In some implementations, the first information is used for indicating that the terminal device has a PUCCH repetition capability, and/or that the terminal device requests PUCCH repetition.

At operation S720, the terminal device performs repetition of the PUCCH1 before a dedicated PUCCH resource is configured.

The method embodiment of the disclosure has been described in detail above in conjunction with FIG. 1 to FIG. 7. The device embodiment of the disclosure is described in detail in conjunction with FIG. 8 to FIG. 10. It is to be understood that the description of the method embodiment corresponds to the description of the method embodiment; therefore, part of the device embodiment that is not detailed may refer to the previous method embodiment.

FIG. 8 illustrates a schematic diagram of a terminal device according to embodiments of the disclosure. The terminal device 800 as illustrated in FIG. 8 includes a sending unit 810.

The sending unit 810 is configured to transmit a repetition-based first physical uplink control channel (PUCCH) to a network device before a dedicated PUCCH resource for the terminal device is configured.

The sending unit is further configured to send first information to the network device. The first information is used for requesting repetition of the first PUCCH and/or indicating a PUCCH repetition capability of the terminal device.

In a possible implementation, the sending unit is further configured to initiate a random access procedure to the network device through a first random access resource. The first random access resource carries the first information.

In a possible implementation, the first random access resource belongs to a first random access resource set among configured random access resource sets. The configured random access resource sets further include a second random access resource set. A random access resource in the second random access resource set is used for carrying an Msg3 physical uplink shared channel (PUSCH) repetition indication. The first random access resource set and the second random access resource set are configured separately or associated with each other.

In a possible implementation, an association relationship between the first random access resource set and the second random access resource set satisfies one of: the first random access resource set is the same as the second random access resource set; the first random access resource set contains the second random access resource set; or the second random access resource set contains the first random access resource set.

In a possible implementation, an intersection between the first random access resource set and the second random access resource set is a third random access resource set, and a random access resource in the third random access resource set is used for carrying the Msg3 PUSCH repetition indication and the first information.

The sending unit is further configured to send an Msg3 to the network device. The Msg3 includes the first information.

The first information is carried in one of the following for the Msg3: a medium access control control element (MAC CE), a common control channel (CCCH), or a radio resource control (RRC) signaling.

In a possible implementation, whether the first information is to be sent is determined based on a first condition, and the first condition is determined based on one or more of: the PUCCH repetition capability of the terminal device; a signal quality measured by the terminal device; a first threshold for the signal quality configured by the network device; or a first random access resource set configured by the network device.

In a possible implementation, the first condition includes one or more of: the signal quality measured by the terminal device is less than the first threshold; a random access resource set used for a PUCCH repetition and a random access resource set not used for the PUCCH repetition are configured by the network device; or the terminal device has the PUCCH repetition capability.

In a possible implementation, the terminal device further includes a receiving unit. The receiving unit is configured to receive second information from the network device. The second information is used for indicating a number of repetitions of the first PUCCH.

In a possible implementation, the second information is carried in a system message.

In a possible implementation, the number of repetitions indicated by the second information is selected from a repetition number set preconfigured or configured by the network device.

In a possible implementation, the repetition number set is carried in a system message; and/or the second information is carried in first downlink control information (DCI).

In a possible implementation, repetition of the first PUCCH includes one or more of: a first repetition in a random access procedure of the terminal device; or a second repetition after the random access procedure is completed and before the dedicated PUCCH resource is configured.

In a possible implementation, a number of repetitions for the second repetition is determined based on one or more of: a number of repetitions for the first repetition; indication information in a second DCI; or a number of PUCCH repetitions indicated by a system message.

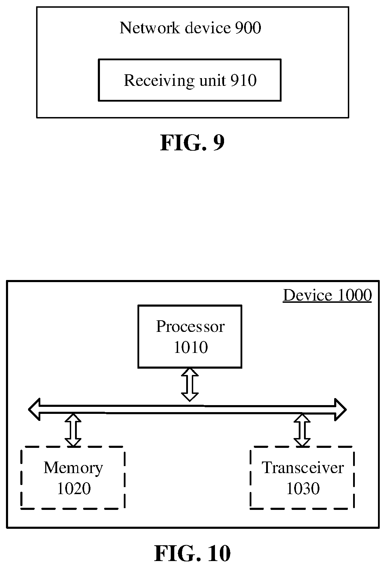

FIG. 9 illustrates a schematic diagram of a network device according to embodiments of the disclosure. The network device 900 as illustrated in FIG. 9 includes a receiving unit 910.

The receiving unit 910 is configured to receive a repetition based first physical uplink control channel (PUCCH) from a terminal device before a dedicated PUCCH resource is configured for the terminal device.

The receiving unit is further configured to receive first information from the terminal device. The first information is used for requesting repetition of the first PUCCH and/or indicating a PUCCH repetition capability of the terminal device.

In a possible implementation, the receiving unit is further configured to receive a random access procedure initiated by the terminal device through a first random access resource, herein, the first random access resource carries the first information.

In a possible implementation, the first random access resource belongs to a first random access resource set among configured random access resource sets. The configured random access resource sets further include a second random access resource set. A random access resource in the second random access resource set is used for carrying an Msg3 PUSCH repetition indication. The first random access resource set and the second random access resource set are configured separately or associated with each other.

In a possible implementation, an association relationship between the first random access resource set and the second random access resource set satisfies one of: the first random access resource set is the same as the second random access resource set; the first random access resource set contains the second random access resource set; or the second random access resource set contains the first random access resource set.

In a possible implementation, an intersection between the first random access resource set and the second random access resource set is a third random access resource set, and a random access resource in the third random access resource set is used for carrying the Msg3 PUSCH repetition indication and the first information.

The receiving unit is further configured to receive an Msg3 from the terminal device. The Msg3 includes the first information.

The first information is carried in one of the following for the Msg3: a medium access control control element (MAC CE), a common control channel (CCCH), or a radio resource control (RRC) signaling.

In a possible implementation, whether the first information is to be sent is determined based on a first condition, and the first condition is determined based on one or more of: the PUCCH repetition capability of the terminal device; a signal quality measured by the terminal device; a first threshold for the signal quality configured by the network device; or a first random access resource set configured by the network device.

In a possible implementation, the first condition includes one or more of: the signal quality measured by the terminal device is less than the first threshold; a random access resource set used for PUCCH repetition and a random access resource set not used for PUCCH repetition are configured by the network device; or the terminal device has the PUCCH repetition capability.

In a possible implementation, the network device further includes a sending unit, configured to send second information to the terminal device. The second information is used for indicating a number of repetitions of the first PUCCH.

In a possible implementation, the second information is carried in a system message.

In a possible implementation, the number of repetitions indicated by the second information is selected from a repetition number set preconfigured or configured by the network device.

In a possible implementation, the repetition number set is carried in a system message; and/or the second information is carried in first downlink control information (DCI).

In a possible implementation, repetition of the first PUCCH includes one or more of: a first repetition in a random access procedure of the terminal device; or a second repetition after the random access procedure is completed and before the dedicated PUCCH resource is configured.

In a possible implementation, a number of repetitions for the second repetition is determined based on one or more of: a number of repetitions for the first repetition; indication information in a second DCI; or a number of PUCCH repetitions indicated by a system message.

In an optional embodiment, the sending unit 810 may be a transceiver 1030. The terminal device 900 may further include a processor 1010 and a memory 1020, as specifically illustrated in FIG. 10.

Further, the receiving unit 910 is a transceiver 1030. The network device 900 also includes a processor 1010 and a memory 1020, as specifically shown in FIG. 10.

FIG. 10 illustrates a schematic structural diagram of a communication device according to embodiments of the disclosure. The dashed lines in FIG. 10 indicate that the units or modules are optional. The device 1000 may be used to implement the methods described in the above method embodiments. The device 1000 may be a chip, a terminal device or a network device.

The device 1000 includes one or more processors 1010. The processor 1010 may support the device 1000 to implement the methods described in the above method embodiments. The processor 1010 may be a universal processor or a special-purpose processor. For example, the processor may be a central processing unit (CPU). Alternatively, the processor may also be such as a general-purpose processor, a digital signal processor (DSP), an application specific integrated circuit (ASIC), a field programmable gate array (FPGA) or another programmable logical device, a discrete gate or a transistor logical device, or a discrete hardware component. The universal processor may be a microprocessor or the processor may also be any conventional processor and the like.

The device 1000 further includes one or more memories 1020. The memory 1020 has stored thereon a program that is executed by the processor 1010 to enable the processor 1010 to implement the methods described in the above method embodiments. The memory 1020 may be a device independent from the processor 1010, or may be integrated in the processor 1010.

The device 1000 further includes a transceiver 1030. The processor 1010 may communicate with another device or chip through the transceiver 1030. For example, the processor 1010 may transmit/receive data to/from another device or chip through the transceiver 1030.

Embodiments of the disclosure further provide a computer-readable storage medium for storing a program. The computer-readable storage medium may be applied to a terminal device or a network device according to the embodiments of the disclosure, and the program enables a computer to implement the method that is implemented by the terminal device or the network device in various embodiments of the disclosure.

Embodiments of the disclosure further provide a computer program product. The computer program product includes a program. The computer program product may be applied to a terminal device or a network device according to the embodiments of the disclosure, and the program enables a computer to implement the method that is implemented by the terminal device or the network device in various embodiments of the disclosure.

Embodiments of the disclosure further provide a computer program. The computer program may be applied to a terminal device or a network device according to the embodiments of the disclosure, and the computer program enables a computer to implement the method that is implemented by the terminal device or the network device in various embodiments of the disclosure.

It is to be understood that the terms "system" and "network" in the disclosure may be used interchangeably. In addition, the terms used in the disclosure are intended for explaining specific embodiments of the disclosure only, rather than limiting. The terms such as "first", "second", "third" and "fourth" in the description, claims and appended drawings of the disclosure are used to distinguish different objects, rather than describing specific orders. Furthermore, the terms "comprise/include/contain" and "have" as well as any variants thereof are intended to cover non-exclusive inclusions.

"Indicate/indicating/indication" referred to in the embodiments of the disclosure may be direct indication or indirect indication, or may refer to that there is an association relationship. By way of example, "A indicates B" may refer to that A directly indicates B, for example, B may be acquired through A. "A indicates B" may also refer to that A indirectly indicates B, for example, A indicates C and B may be acquired through C. "A indicates B" may also refer to that there is an association relationship between A and B.

In the embodiments of the disclosure, "B corresponding to A" means that B is associated with A, and B may be determined based on A. However, it is also be understood that determining B based on A does not mean that B is determined only based on A, but B may also be determined from A and/or other information.

In the embodiments of the disclosure, the term "correspond/corresponding/correspondence" may mean that there is a direct correspondence or indirect correspondence between two objects, or may mean that there is an association relationship between the two objects, or may mean a relationship between indication and being indicated or a relationship between configuration and being configured.

In the embodiments of the disclosure, "predefined" or "preconfigured" may be achieved by pre-storing corresponding codes, tables or other means used for indicating relevant information in devices (e.g., including terminal devices and network devices), and the present disclosure is not limited to the specific implementation thereof. For example, "predefined" may refer to being defined in a protocol.

In the embodiments of the disclosure, the "protocol" may refer to specification protocols in the field of communications, for example, long-term evolution (LTE) protocols, new radio (NR) protocols or relevant protocols applied in future communication systems, which is not limited in the embodiments of the disclosure.

In the embodiments of the disclosure, the term "and/or" herein merely describes a relation between associated objects, representing that three relations may exist. For example, A and/or B may represent the following three cases: existence of A alone, existence of both A and B, and existence of B alone. The character "/" generally indicates that the associated objects before and after this character is in an "or" relationship.

In the embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics.

In some embodiments provided in the disclosure, it is to be understood that the disclosed systems, devices and methods may be implemented in other ways. For example, the device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical, mechanical or in other forms.

The units described as separate components may or may not be physically discrete from one another. Components displayed as units may or may not be physical units, and may be located at the same place or may be distributed to multiple network units. Some or all of the units may be chosen to realize the purpose of the solution of the embodiments according to actual requirements.

Additionally, various functional units in the embodiments of the disclosure may be integrated in one processing unit, or may exist separately physically; or two or more units may be integrated in one unit.

The above embodiments may be implemented by software, hardware, firmware or any combination thereof completely or in part. When software is used, the embodiments may be implemented in form of a computer program product completely or in part. The computer program product includes one or more computer instructions. The computer program instructions, when loaded and executed by a computer, produce the procedures or functions according to the embodiments of the disclosure completely or in part. The computer may be a universal computer, a dedicated computer, a computer network, or other programmable devices. The computer instructions may be stored in a computer-readable storage medium, or may be transmitted from a computer-readable storage medium to another computer-readable storage medium, for example, the computer instructions may be transmitted from a network station, computer, server or data center to another network station, computer, server or data center in a wired (e.g., coaxial cable, fiber, digital subscriber line (DSL)) or wireless (e.g., infrared, radio, microwaves) manner. The computer-readable storage medium may be any available medium readable by a computer or may be a data storage device containing a server, a data center or the like integrated by one or more available mediums. The available medium may be a magnetic medium (e.g., a floppy disk, a hard disk, and a magnetic tape), an optical medium (e.g., a digital video disk (DVD)), a semiconductor medium (e.g., a solid state disk (SSD)), or the like.

The above descriptions are merely specific implementations of the disclosure, but the scope of protection of the disclosure is not limited thereto. Any modification or replacement that are easily conceivable by those familiar with the related art within the technical range disclosed by the disclosure shall fall within the scope of this disclosure. Therefore, the scope of protection of the disclosure should be subject to the scope of protection of the claims.

## Claims

1. A method for wireless communication, comprising:

   transmitting (S210), by a terminal device, a repetition-based first physical uplink control channel, PUCCH, to a network device before a dedicated PUCCH resource for the terminal device is configured,
   wherein the method further comprises: before transmitting (S210), by the terminal device, the repetition-based first PUCCH to the network device,
   sending (S420, S520, S610), by the terminal device, first information to the network device, wherein the first information is used for requesting repetition of the first PUCCH and/or indicating a PUCCH repetition capability of the terminal device,
   wherein sending (S420, S520, S610), by the terminal device, the first information to the network device comprises:

   sending, by the terminal device, a message 3, Msg3, to the network device, wherein the Msg3 comprises the first information,
   wherein the first information is carried in a common control channel, CCCH, for the Msg3,
   wherein a CCCH service data unit, SDU, transmitted by the terminal device in the Msg3 is an SDU corresponding to a first CCCH and a second CCCH, the first information corresponds to the first CCCH and the second CCCH, and the first CCCH and the second CCCH correspond to different bit sizes.

2. The method of claim 1, wherein whether the first information is sent is determined based on a first condition, and the first condition is determined based on one or more of:

   the PUCCH repetition capability of the terminal device;
   a signal quality measured by the terminal device;
   a first threshold for the signal quality configured by the network device; or
   a first random access resource set configured by the network device,
   wherein the first condition comprises one or more of:

   the signal quality measured by the terminal device is less than the first threshold;
   a random access resource set for a PUCCH repetition and a random access resource set not for the PUCCH repetition are configured by the network device; or
   the terminal device has the PUCCH repetition capability.

3. The method of any one of claims 1 to 2, further comprising: before transmitting (S210), by the terminal device, the repetition-based first PUCCH to the network device,
   receiving (S410, S530), by the terminal device, second information from the network device, wherein the second information is used for indicating a number of repetitions of the first PUCCH.

4. The method of claim 3, wherein the second information is carried in a system message;

or,

wherein the number of repetitions indicated by the second information is selected from a repetition number set configured by the network device or preconfigured; and wherein the repetition number set is carried in a system message, and/or the second information is carried in first downlink control information, DCI.

5. The method of any one of claims 1 to 4, wherein repetition of the first PUCCH comprises one or more of:

> a first repetition in a random access procedure of the terminal device; or
> a second repetition after the random access procedure is completed and before the dedicated PUCCH resource is configured,
> wherein a number of repetitions for the second repetition is determined based on one or more of:

>> a number of repetitions for the first repetition;
>> indication information in a second DCI; or
>> a number of PUCCH repetitions indicated by a system message.

6. A method for wireless communication, comprising:

> receiving (S210), by a network device, a repetition-based first physical uplink control channel, PUCCH, from a terminal device before a dedicated PUCCH resource for the terminal device is configured,
> wherein the method further comprises: before receiving (S210), by the network device, the repetition-based first PUCCH from the terminal device,
> receiving (S420, S520, S610), by the network device, first information from the terminal device, wherein the first information is used for requesting repetition of the first PUCCH and/or indicating a PUCCH repetition capability of the terminal device,
> wherein receiving (S420, S520, S610), by the network device, the first information from the terminal device comprises:

>> receiving, by the network device, a message 3, Msg3, from the terminal device, wherein the Msg3 comprises the first information,
>> wherein the first information is carried in a common control channel, CCCH, for the Msg3,
>> wherein a CCCH service data unit, SDU, transmitted by the terminal device in the Msg3 is an SDU corresponding to a first CCCH and a second CCCH, the first information corresponds to the first CCCH and the second CCCH, and the first CCCH and the second CCCH correspond to different bit sizes.

7. The method of claim 6, wherein whether the first information is sent is determined based on a first condition, and the first condition is determined based on one or more of:

> the PUCCH repetition capability of the terminal device;
> a signal quality measured by the terminal device;
> a first threshold for the signal quality configured by the network device; or
> a first random access resource set configured by the network device,
> wherein the first condition comprises one or more of:

>> the signal quality measured by the terminal device is less than the first threshold;
>> a random access resource set for a PUCCH repetition and a random access resource set not for the PUCCH repetition are configured by the network device; or
>> the terminal device has the PUCCH repetition capability;

8. The method of any one of claims 6 to 7, further comprising: before transmitting (S210), by the terminal device, the repetition-based first PUCCH to the network device,

> sending (S410, S530), by the network device, second information to the terminal device, wherein the second information is used for indicating a number of repetitions of the first PUCCH,
> wherein the second information is carried in a system message, or,
> wherein the number of repetitions indicated by the second information is selected from a repetition number set preconfigured or configured by the network device; and wherein the repetition number set is carried in a system message, and/or the second information is carried in first downlink control information, DCI.

9. The method of any one of claims 6 to 8, wherein repetition of the first PUCCH comprises one or more of:

> a first repetition in a random access procedure of the terminal device; or
> a second repetition after the random access procedure is completed and before the dedicated PUCCH resource is configured,
> wherein a number of repetitions for the second repetition is determined based on one or more of:

>> a number of repetitions for the first repetition;
>> indication information in a second DCI; or

> a number of PUCCH repetitions indicated by a system message.

10. A terminal device, comprising a transceiver (1030), a memory (1020) and a processor (1010), wherein the memory (1020) is configured to store a program, and the processor (1010) is configured to call the program stored in the memory and to control the transceiver (1030) to receive or send a signal, to enable the terminal device to perform the method of any one of claims 1 to 5.

11. A network device, comprising a transceiver (1030), a memory (1020) and a processor (1010), wherein the memory (1020) is configured to store a program, and the processor (1010) is configured to call the program stored in the memory and to control the transceiver (1030) to receive or send a signal, to enable the network device to perform the method of any one of claims 6 to 9.

**Patentansprüche**

1. Verfahren zur drahtlosen Kommunikation, umfassend:

> Übertragen (S210), durch ein Endgerät, eines auf Wiederholung basierenden ersten physischen Uplink-Steuerkanals, PUCCH, an ein Netzwerkgerät, bevor eine dedizierte PUCCH-Ressource für das Endgerät konfiguriert ist,
> wobei das Verfahren ferner umfasst: vor dem Übertragen (S210), durch das Endgerät, des auf Wiederholung basierenden ersten PUCCH an das Netzwerkgerät,
> Senden (S420, S520, S610), durch das Endgerät, einer ersten Information an das Netzwerkgerät, wobei die erste Information zum Anfordern einer Wiederholung des ersten PUCCH und/oder zum Anzeigen einer PUCCH-Wiederholungsfähigkeit des Endgeräts verwendet wird,
> wobei das Senden (S420, S520, S610), durch das Endgerät, der ersten Information an das Netzwerkgerät umfasst:

>> Senden, durch das Endgerät, einer Nachricht 3, Msg3, an das Netzwerkgerät, wobei die Msg3 die erste Information umfasst,
>> wobei die erste Information in einem gemeinsamen Steuerkanal, CCCH, für die Msg3 getragen wird,
>> wobei eine CCCH-Dienstdateneinheit, SDU, die durch das Endgerät in der Msg3 übertragen wird, eine SDU ist, die einem ersten CCCH und einem zweiten CCCH entspricht, die erste Information dem ersten CCCH und dem zweiten CCCH entspricht, und der erste CCCH und der zweite CCCH unterschiedlichen Bitgrößen entsprechen.

2. Verfahren nach Anspruch 1, wobei, ob die erste Information gesendet wird oder nicht, auf der Grundlage einer ersten Bedingung bestimmt wird, und die erste Bedingung auf der Grundlage eines oder mehrerer der folgenden Elemente bestimmt wird:

> der PUCCH-Wiederholungsfähigkeit des Endgeräts;
> einer durch das Endgerät gemessenen Signalqualität;
> eines ersten Schwellenwerts für die Signalqualität, der durch das Netzwerkgerät konfiguriert ist; oder
> eines ersten Satzes von Direktzugriffsressourcen, der durch das Netzwerkgerät konfiguriert ist,
> wobei die erste Bedingung eines oder mehrere der folgenden Elemente umfasst:

>> die durch das Endgerät gemessene Signalqualität ist kleiner als der erste Schwellenwert;
>> ein Satz von Direktzugriffsressourcen für eine PUCCH-Wiederholung und ein Satz von Direktzugriffsressourcen, der nicht für die PUCCH-Wiederholung bestimmt ist, sind durch das Netzwerkgerät konfiguriert; oder

das Endgerät verfügt über die PUCCH-Wiederholungsfähigkeit.

3. Verfahren nach einem der Ansprüche 1 bis 2, ferner umfassend: vor dem Übertragen (S210), durch das Endgerät, des auf Wiederholung basierenden ersten PUCCH an das Netzwerkgerät,
Empfangen (S410, S530), durch das Endgerät, einer zweiten Information von dem Netzwerkgerät, wobei die zweite Information zum Anzeigen einer Anzahl von Wiederholungen des ersten PUCCH verwendet wird.

4. Verfahren nach Anspruch 3, wobei die zweite Information in einer Systemnachricht getragen wird; oder,
wobei die durch die zweite Information angezeigte Anzahl von Wiederholungen aus einem Wiederholungszahlensatz ausgewählt wird, der durch das Netzwerkgerät konfiguriert oder vorkonfiguriert ist; und wobei der Wiederholungszahlensatz in einer Systemnachricht getragen wird und/oder die zweite Information in einer ersten Downlink-Steuerinformation, DCI, getragen wird.

5. Verfahren nach einem der Ansprüche 1 bis 4, wobei die Wiederholung des ersten PUCCH eines oder mehrere der folgenden Elemente umfasst:

eine erste Wiederholung in einem Direktzugriffsverfahren des Endgeräts; oder
eine zweite Wiederholung, nachdem das Direktzugriffsverfahren abgeschlossen ist und bevor die dedizierte PUCCH-Ressource konfiguriert ist,
wobei eine Anzahl von Wiederholungen für die zweite Wiederholung auf der Grundlage eines oder mehrerer der folgenden Elemente bestimmt wird:

einer Anzahl von Wiederholungen für die erste Wiederholung;
einer Anzeigeinformation in einem zweiten DCI; oder
einer Anzahl von PUCCH-Wiederholungen, die durch eine Systemnachricht angezeigt wird.

6. Verfahren zur drahtlosen Kommunikation, umfassend:

Empfangen (S210), durch ein Netzwerkgerät, eines auf Wiederholung basierenden ersten physischen Uplink-Steuerkanals, PUCCH, von einem Endgerät, bevor eine dedizierte PUCCH-Ressource für das Endgerät konfiguriert ist,
wobei das Verfahren ferner umfasst: vor dem Empfangen (S210), durch das Netzwerkgerät, des auf Wiederholung basierenden ersten PUCCH von dem Endgerät, Empfangen (S420, S520, S610), durch das Netzwerkgerät, einer ersten Information von dem Endgerät, wobei die erste Information zum Anfordern einer Wiederholung des ersten PUCCH und/oder zum Anzeigen einer PUCCH-Wiederholungsfähigkeit des Endgeräts verwendet wird,
wobei das Empfangen (S420, S520, S610), durch das Netzwerkgerät, der ersten Information von dem Endgerät umfasst:

Empfangen, durch das Netzwerkgerät, einer Nachricht 3, Msg3, von dem Endgerät, wobei die Msg3 die erste Information umfasst,
wobei die erste Information in einem gemeinsamen Steuerkanal, CCCH, für die Msg3 getragen wird,
wobei eine CCCH-Dienstdateneinheit, SDU, die durch das Endgerät in der Msg3 übertragen wird, eine SDU ist, die einem ersten CCCH und einem zweiten CCCH entspricht, die erste Information dem ersten CCCH und dem zweiten CCCH entspricht, und der erste CCCH und der zweite CCCH unterschiedlichen Bitgrößen entsprechen.

7. Verfahren nach Anspruch 6, wobei, ob die erste Information gesendet wird oder nicht, auf der Grundlage einer ersten Bedingung bestimmt wird, und die erste Bedingung auf der Grundlage eines oder mehrerer der folgenden Elemente bestimmt wird:

der PUCCH-Wiederholungsfähigkeit des Endgeräts;
einer durch das Endgerät gemessenen Signalqualität;
eines ersten Schwellenwerts für die Signalqualität, der durch das Netzwerkgerät konfiguriert ist; oder
eines ersten Satzes von Direktzugriffsressourcen, der durch das Netzwerkgerät konfiguriert ist,
wobei die erste Bedingung eines oder mehrere der folgenden Elemente umfasst:

die durch das Endgerät gemessene Signalqualität ist kleiner als der erste Schwellenwert; ein Satz von Direktzugriffsressourcen für eine PUCCH-Wiederholung und ein Satz von Direktzugriffsressourcen, der nicht für die PUCCH-Wiederholung bestimmt ist, sind durch das Netzwerkgerät konfiguriert; oder das Endgerät verfügt über die PUCCH-Wiederholungsfähigkeit.

8. Verfahren nach einem der Ansprüche 6 bis 7, ferner umfassend: vor dem Übertragen (S210), durch das Endgerät, des auf Wiederholung basierenden ersten PUCCH an das Netzwerkgerät,

Senden (S410, S530), durch das Netzwerkgerät, einer zweiten Information an das Endgerät, wobei die zweite Information zum Anzeigen einer Anzahl von Wiederholungen des ersten PUCCH verwendet wird, wobei die zweite Information in einer Systemnachricht getragen wird, oder, wobei die durch die zweite Information angezeigte Anzahl von Wiederholungen aus einem Wiederholungszahlensatz ausgewählt wird, der durch das Netzwerkgerät vorkonfiguriert oder konfiguriert ist; und wobei der Wiederholungszahlensatz in einer Systemnachricht getragen wird und/oder die zweite Information in einer ersten Downlink-Steuerinformation, DCI, getragen wird.

9. Verfahren nach einem der Ansprüche 6 bis 8, wobei die Wiederholung des ersten PUCCH eines oder mehrere der folgenden Elemente umfasst:

eine erste Wiederholung in einem Direktzugriffsverfahren des Endgeräts; oder eine zweite Wiederholung, nachdem das Direktzugriffsverfahren abgeschlossen ist und bevor die dedizierte PUCCH-Ressource konfiguriert ist, wobei eine Anzahl von Wiederholungen für die zweite Wiederholung auf der Grundlage eines oder mehrerer der folgenden Elemente bestimmt wird:

einer Anzahl von Wiederholungen für die erste Wiederholung; einer Anzeigeinformation in einem zweiten DCI; oder einer Anzahl von PUCCH-Wiederholungen, die durch eine Systemnachricht angezeigt wird.

10. Endgerät, umfassend einen Sendeempfänger (1030), einen Speicher (1020) und einen Prozessor (1010), wobei der Speicher (1020) konfiguriert ist, ein Programm zu speichern, und der Prozessor (1010) konfiguriert ist, das im Speicher gespeicherte Programm aufzurufen und den Sendeempfänger (1030) zu steuern, um ein Signal zu empfangen oder zu senden, um es dem Endgerät zu ermöglichen, das Verfahren nach einem der Ansprüche 1 bis 5 auszuführen.

11. Netzwerkgerät, umfassend einen Sendeempfänger (1030), einen Speicher (1020) und einen Prozessor (1010), wobei der Speicher (1020) konfiguriert ist, ein Programm zu speichern, und der Prozessor (1010) konfiguriert ist, das im Speicher gespeicherte Programm aufzurufen und den Sendeempfänger (1030) zu steuern, um ein Signal zu empfangen oder zu senden, um es dem Netzwerkgerät zu ermöglichen, das Verfahren nach einem der Ansprüche 6 bis 9 auszuführen.

**Revendications**

1. Procédé de communication sans fil, comprenant :

la transmission (S210), par un dispositif terminal, d'un premier canal physique de commande de liaison montante, PUCCH, basé sur la répétition, à un dispositif de réseau avant qu'une ressource PUCCH dédiée pour le dispositif terminal ne soit configurée, dans lequel le procédé comprend en outre : avant la transmission (S210), par le dispositif terminal, du premier PUCCH basé sur la répétition au dispositif de réseau, l'envoi (S420, S520, S610), par le dispositif terminal, d'une première information au dispositif de réseau, dans lequel la première information est utilisée pour demander la répétition du premier PUCCH et/ou indiquer une capacité de répétition PUCCH du dispositif terminal, dans lequel l'envoi (S420, S520, S610), par le dispositif terminal, de la première information au dispositif de réseau comprend :

l'envoi, par le dispositif terminal, d'un message 3, Msg3, au dispositif de réseau, dans lequel le Msg3 comprend la première information,

dans lequel la première information est portée dans un canal de commande commun, CCCH, pour le Msg3, dans lequel une unité de données de service CCCH, SDU, transmise par le dispositif terminal dans le Msg3 est une SDU correspondant à un premier CCCH et un second CCCH, la première information correspond au premier CCCH et au second CCCH, et le premier CCCH et le second CCCH correspondent à des tailles de bits différentes.

2. Procédé selon la revendication 1, dans lequel le fait que la première information soit envoyée ou non est déterminé sur la base d'une première condition, et la première condition est déterminée sur la base d'un ou de plusieurs éléments parmi :

la capacité de répétition PUCCH du dispositif terminal ;
une qualité de signal mesurée par le dispositif terminal ;
un premier seuil pour la qualité de signal configuré par le dispositif de réseau ; ou
un premier ensemble de ressources d'accès aléatoire configuré par le dispositif de réseau,
dans lequel la première condition comprend un ou plusieurs éléments parmi :

la qualité de signal mesurée par le dispositif terminal est inférieure au premier seuil ;
un ensemble de ressources d'accès aléatoire pour une répétition PUCCH et un ensemble de ressources d'accès aléatoire non destiné à la répétition PUCCH sont configurés par le dispositif de réseau ; ou
le dispositif terminal possède la capacité de répétition PUCCH.

3. Procédé selon l'une quelconque des revendications 1 à 2, comprenant en outre : avant la transmission (S210), par le dispositif terminal, du premier PUCCH basé sur la répétition au dispositif de réseau,
la réception (S410, S530), par le dispositif terminal, d'une seconde information en provenance du dispositif de réseau, dans lequel la seconde information est utilisée pour indiquer un nombre de répétitions du premier PUCCH.

4. Procédé selon la revendication 3, dans lequel la seconde information est portée dans un message système ; ou, dans lequel le nombre de répétitions indiqué par la seconde information est sélectionné à partir d'un ensemble de nombres de répétitions configuré par le dispositif de réseau ou préconfiguré ; et dans lequel l'ensemble de nombres de répétitions est porté dans un message système, et/ou la seconde information est portée dans une première information de commande de liaison descendante, DCI.

5. Procédé selon l'une quelconque des revendications 1 à 4, dans lequel la répétition du premier PUCCH comprend un ou plusieurs éléments parmi :

une première répétition dans une procédure d'accès aléatoire du dispositif terminal ; ou une seconde répétition après que la procédure d'accès aléatoire est achevée et avant que la ressource PUCCH dédiée ne soit configurée,
dans lequel un nombre de répétitions pour la seconde répétition est déterminé sur la base d'un ou de plusieurs éléments parmi :

un nombre de répétitions pour la première répétition ;
une information d'indication dans un second DCI ; ou
un nombre de répétitions PUCCH indiqué par un message système.

6. Procédé de communication sans fil, comprenant :

la réception (S210), par un dispositif de réseau, d'un premier canal physique de commande de liaison montante, PUCCH, basé sur la répétition, en provenance d'un dispositif terminal avant qu'une ressource PUCCH dédiée pour le dispositif terminal ne soit configurée,
dans lequel le procédé comprend en outre : avant la réception (S210), par le dispositif de réseau, du premier PUCCH basé sur la répétition en provenance du dispositif terminal,
la réception (S420, S520, S610), par le dispositif de réseau, d'une première information en provenance du dispositif terminal, dans lequel la première information est utilisée pour demander la répétition du premier PUCCH et/ou indiquer une capacité de répétition PUCCH du dispositif terminal,
dans lequel la réception (S420, S520, S610), par le dispositif de réseau, de la première information en provenance du dispositif terminal comprend :

la réception, par le dispositif de réseau, d'un message 3, Msg3, en provenance du dispositif terminal, dans lequel le Msg3 comprend la première information,

dans lequel la première information est portée dans un canal de commande commun, CCCH, pour le Msg3, dans lequel une unité de données de service CCCH, SDU, transmise par le dispositif terminal dans le Msg3 est une SDU correspondant à un premier CCCH et un second CCCH, la première information correspond au premier CCCH et au second CCCH, et le premier CCCH et le second CCCH correspondent à des tailles de bits différentes.

**7.** Procédé selon la revendication 6, dans lequel le fait que la première information soit envoyée ou non est déterminé sur la base d'une première condition, et la première condition est déterminée sur la base d'un ou de plusieurs éléments parmi :

la capacité de répétition PUCCH du dispositif terminal ;
une qualité de signal mesurée par le dispositif terminal ;
un premier seuil pour la qualité de signal configuré par le dispositif de réseau ; ou
un premier ensemble de ressources d'accès aléatoire configuré par le dispositif de réseau,
dans lequel la première condition comprend un ou plusieurs éléments parmi :

la qualité de signal mesurée par le dispositif terminal est inférieure au premier seuil ;
un ensemble de ressources d'accès aléatoire pour une répétition PUCCH et un ensemble de ressources d'accès aléatoire non destiné à la répétition PUCCH sont configurés par le dispositif de réseau ; ou
le dispositif terminal possède la capacité de répétition PUCCH.

**8.** Procédé selon l'une quelconque des revendications 6 à 7, comprenant en outre : avant la transmission (S210), par le dispositif terminal, du premier PUCCH basé sur la répétition au dispositif de réseau,

l'envoi (S410, S530), par le dispositif de réseau, d'une seconde information au dispositif terminal, dans lequel la seconde information est utilisée pour indiquer un nombre de répétitions du premier PUCCH,
dans lequel la seconde information est portée dans un message système, ou,
dans lequel le nombre de répétitions indiqué par la seconde information est sélectionné à partir d'un ensemble de nombres de répétitions préconfiguré ou configuré par le dispositif de réseau ; et dans lequel l'ensemble de nombres de répétitions est porté dans un message système, et/ou la seconde information est portée dans une première information de commande de liaison descendante, DCI.

**9.** Procédé selon l'une quelconque des revendications 6 à 8, dans lequel la répétition du premier PUCCH comprend un ou plusieurs éléments parmi :

une première répétition dans une procédure d'accès aléatoire du dispositif terminal ; ou
une seconde répétition après que la procédure d'accès aléatoire est achevée et avant que la ressource PUCCH dédiée ne soit configurée,
dans lequel un nombre de répétitions pour la seconde répétition est déterminé sur la base d'un ou de plusieurs éléments parmi :

un nombre de répétitions pour la première répétition ;
une information d'indication dans un second DCI ; ou
un nombre de répétitions PUCCH indiqué par un message système.

**10.** Dispositif terminal, comprenant un émetteur-récepteur (1030), une mémoire (1020) et un processeur (1010), dans lequel la mémoire (1020) est configurée pour stocker un programme, et le processeur (1010) est configuré pour appeler le programme stocké dans la mémoire et pour commander l'émetteur-récepteur (1030) afin de recevoir ou d'envoyer un signal, pour permettre au dispositif terminal d'exécuter le procédé selon l'une quelconque des revendications 1 à 5.

**11.** Dispositif de réseau, comprenant un émetteur-récepteur (1030), une mémoire (1020) et un processeur (1010), dans lequel la mémoire (1020) est configurée pour stocker un programme, et le processeur (1010) est configuré pour appeler le programme stocké dans la mémoire et pour commander l'émetteur-récepteur (1030) afin de recevoir ou d'envoyer un signal, pour permettre au dispositif de réseau d'exécuter le procédé selon l'une quelconque des revendications 6 à 9.

100

110

120

120

**FIG. 1**

| Terminal device |  | Network device |

S210, Transmit a repetition-based first PUCCH before a dedicated PUCCH resource for the terminal device is configured

**FIG. 2**

| Terminal device |  | Network device |

S310, Configuration information 1

Measure signal quality — S320

S330, Determine whether to send first information based on the measured signal quality and a PUCCH repetition threshold

**FIG. 3**

```
┌─────────────┐                                    ┌─────────────────┐
│  Terminal   │                                    │ Network device  │
│  device     │                                    │                 │
└─────────────┘                                    └─────────────────┘
       │              S410，Second information              │
       │◄───────────────────────────────────────────────────│
       │                                                     │
       │              S420，First information                │
       │────────────────────────────────────────────────────►│
       │                                                     │
       │        S430，Perform repetition of PUCCH1           │
       │────────────────────────────────────────────────────►│
       │         based on the number N of repetitions        │
```

**FIG. 4**

```
┌─────────────┐                                    ┌─────────────────┐
│  Terminal   │                                    │ Network device  │
│  device     │                                    │                 │
└─────────────┘                                    └─────────────────┘
       │            S510，System information 1               │
       │◄───────────────────────────────────────────────────│
       │                                                     │
       │              S520，First information                │
       │────────────────────────────────────────────────────►│
       │                                                     │
       │              S530，Second information               │
       │◄───────────────────────────────────────────────────│
       │                                                     │
       │        S540，Perform repetition of PUCCH1           │
       │────────────────────────────────────────────────────►│
       │         based on the number N of repetitions        │
```

**FIG. 5**

Terminal device | | Network device

S610，First information before an Msg4 is transmitted

S620，Perform repetition of PUCCH1 before a dedicated PUCCH resource is configured

**FIG. 6**

Terminal device | | Network device

S710，First information after an Msg4 is transmitted

S720，Perform repetition of PUCCH1 before a dedicated PUCCH resource is configured

**FIG. 7**

Terminal device 800

Sending unit 810

**FIG. 8**

Network device 900

Receiving unit 910

**FIG. 9**

Device 1000

Processor
1010

Memory
1020

Transceiver
1030

**FIG. 10**

**REFERENCES CITED IN THE DESCRIPTION**

**Non-patent literature cited in the description**

- **QUALCOMM INCORPORATED**. Coverage enhancements for NR NTN. *R1-2210004*

- **QUALCOMM INCORPORATED**. Coverage enhancements for NR NTN. *R1-2212136*